# EUROPEAN PATENT SPECIFICATION

(11) **EP 0 906 838 B1**
(45) Date of publication and mention of the grant of the patent: **04.06.2003**
(21) Application number: 98118224.9
(22) Date of filing: 25.09.1998
(51) Int. Cl.: B60C 15/06, B60C 1/00, C08L 9/00

(54) **Tire with chafer composition**
Reifen mit Wultsgummimischung
Bandage pneumatique et composition d'un élément de friction dans son bourrelet

(30) Priority: 02.10.1997 US 943056
(43) Date of publication of application: 07.04.1999
(73) Proprietor: THE GOODYEAR TIRE & RUBBER COMPANY, Akron, Ohio 44316-0001 (US)
(72) Inventor: Corvasce, Filomeno Gennaro, L-9167 Mertzig (LU); Pompei, Manuela, Kayl 3671 (LU)
(74) Representative: Leitz, Paul

(56) References cited:
- EP-A- 0 445 486
- EP-A- 0 645 424
- EP-A- 0 867 471
- US-A- 4 067 373

## Description

### Field

This invention relates to a tire with a chafer positioned around at least a portion of the tire's bead component and intended for contacting a rigid rim of a wheel.

### Background

Pneumatic rubber tires are conventionally composed of a carcass with sidewalls and circumferential tread designed to be ground-contacting as well as two spaced apart, relatively inextensible beads, usually composed of twisted, or cabled, metallic wires, which are surrounded by rubber components. A significant component which is conventionally positioned around a portion of the bead is the chafer. The chafer is a rubber composition conventionally designed to contact a rigid wheel rim and, therefore, interface between the tire, particularly the bead portion of the tire, and rigid wheel rim. The chafer rubber composition must normally be very abrasion resistant, tough, and have a relatively high stiffness while also having acceptable flex and rubber fatigue properties as well as having good resistance to cut growth.

A particular typical concern for a chafer rubber composition is rim chafing (abrasion against a rigid rim upon which the tire is mounted), resistance to ozone degradation and reduced permanent set.

Such tire construction, including use of a chafer component, as well as the typical concerns, are well known to those skilled in such art.

The chafer rubber composition is conventionally composed of a diene-based rubber composition which is carbon black reinforced. The chafer rubber composition may optionally contain a textile fabric reinforcement for dimensional stability, where the textile fabric portion of the chafer is conventionally adjacent to the bead portion of the tire, leaving the rubber portion of the chafer to contact the rigid wheel rim when the tire is mounted on such rim and inflated.

Pneumatic tire chafers, their intended interface between the tire bead and rigid wheel rim, as well as their rather demanding physical properties, are considered herein to be well known to those skilled in such art.

A chafer's rubber composition might be composed of, for example, of cis 1,4-polyisoprene natural rubber and cis 1,4-polybutadiene rubber in order to have good abrasion resistance and durability.

A particular concern for fabrication of the tire components, particularly the chafer rubber composition in the actual building of the tire is the green stiffness of the chafer rubber composition. The green stiffness of the chafer rubber in its uncured state is considered herein to be significantly important because it helps to keep the components in the bead area of the tire in position prior to curing and, also, during the vulcanization of the tire under conditions of elevated temperature and pressure, to reduce the extent of flow of the rubber composition of the tire component in the tire mold.

It is also desired that the chafer composition exhibit a low stiffness variation. By the term "low stiffness variation" it is meant that "the dynamic stiffness of the chafer composition does not change appreciably over a reasonable period of time and after typical strain histories". Such dynamic stiffness can be represented, for example, by shear complex modulus G*, and other resultant viscoelastic properties such as loss modulus G" and tangent delta values, taken at about 60°C.

In practice, for the chafer of this invention, it is intended that the shear complex modulus G* of the chafer composition does not vary more than about fifteen percent, preferably not more than ten percent, for the normal useful life of the tire.

Conventional analytical apparatus, or equipment, is used for measuring elastic modulus G*, loss modulus G" and tangent delta values of rubber compositions and the use and application of such apparatus for determining such values for rubber compositions is believed to be well known to those skilled in such rubber composition analytical art.

In practice, it is considered herein to be important to use tire chafer rubber compositions which have relatively stable rubber properties such as, for example, the aforesaid relatively high stiffness and relatively low hysteresis properties during a substantial portion of the expected useful life of the tire under typical operating conditions. Thus, it is desired herein to provide such a chafer composition having a relatively low stiffness variation.

This is considered important because excessive variations of the tire chafer properties such as stiffness, hysteresis and permanent set during the expected useful life of the tire under typical operating conditions and solicitations of the tire tread will conventionally be expected to result in a reduction in tire, or wheel, steering quality, resistance to heat build-up (thus, increased internal temperature) at high vehicular speeds and an increase in tire flat spotting (global permanent set).

EP-A- 445 486 relates to a process wherein rubber compositions having increased modulus are prepared by the formation of polypropylene fibrils randomly dispersed throughout the rubber matrix.

In the description of this invention, the term "phr" where used herein, and according to conventional practice, refers to "parts of a respective material per 100 parts by weight or rubber, or elastomer".

In the description of this invention, the terms "rubber" and "elastomer", where used herein unless otherwise prescribed, are used interchangeably. The terms "rubber composition", "compounded rubber" and "rubber compound" where used herein unless otherwise prescribed, are used interchangeably to refer to "rubber which has been blended or mixed with various ingredients or materials" and such terms are well known to those having skill in the rubber mixing, or rubber compounding, art.

The Tg of a polymer, particularly an elastomer, if used herein unless otherwise prescribed, refers to its glass transition temperature which can conventionally be determined, for example, by a differential scanning calorimeter at a heating rate of, for example, about 20°C, to an observed transition of the temperature versus time curve. It is understood that such Tg determination is well known to those having skill in such art.

### Summary and Practice of the Invention

In accordance with this invention, a pneumatic rubber tire is provided as defined in the claims.

By the term "diene-based elastomer" it is meant that "the elastomer have a diene origin or content, whether it be a natural or synthetic elastomer and, therefore, is considered to contain carbon-to-carbon double bonds and to, therefore, be sulfur vulcanizable".

In one aspect, the chafer composition is required to be polyphased in a sense that the particulate thermoplastic polymer(s) of the said micro inclusion dispersion is incompatible with the elastomer(s) of the chafer because the thermoplastic particles remain as a separate phase from the elastomer(s) in a homogeneous mixture, or dispersion, of the particulate thermoplastic polymer(s) in the rubber composition.

By the term "micro inclusion" of the thermoplastic particles into the elastomer composition for the chafer it is meant that "the particles are present as dispersed micro particles", sometimes substantially in a form of spheres, with individual properties such as stiffness and hysteresis being significantly different from the elastomer composition matrix itself.

The term "matrix" is intended to mean "the rubber composition phase which surrounds the aforesaid micro inclusions".

Thermoplastic particles for the micro inclusion typically have a softening point, according to ISO Method No. 306, in a range of 110°C to 180°C and, thus, may soften somewhat at a temperature above or below the typical processing, or mixing, temperature range of 140°C to 190°C for the preparation of the elastomer composition itself.

However, such thermoplastic particles for the micro inclusion have very high molecular weights which have a significantly higher viscosity than the matrix when reaching their melting points, even when the processing temperature is above the softening point of the thermoplastic polymer, it is considered herein that any deformation of the polymer is relatively minimal in nature so that the particles keep their particulate nature.

Therefore, it is considered herein that the particles remain as independent, dispersed particles within the elastomer composition and as unvulcanized domains within the elastomer composition when it is sulfur vulcanized under conditions of elevated temperature in a range of 150°C to 190°C.

It is believed herein that the aforesaid inclusions of thermoplastic particles into the elastomer composition for the tire chafer may comply with one or more composite theories. Such theories may include micro-macro theories where individual phase properties, namely the aforesaid micro inclusion of particles and the matrix phases, the resulting macroscopic properties of the polyphased composition can be tailored or suitably modified. Representative macroscopic properties are, for example, complex modulus, and loss modulus at various strains. The dynamic property such as, for example, complex stiffness, of the micro phase might be tailored or modified, for example, by (i) selecting various grades of the said particulate thermoplastic materials such as, for example, several samples of a thermoplastic material with varying melting points, within the required melting point range, for the included dispersion phase which can result in suitable variations in the overall polyphased composition's stiffness as a function of temperature and then (ii) selecting the said thermoplastic materials with specific melting points in order to control, or achieve, a desired stiffness variation with temperature of the polyphased composition. In addition, the macroscopic properties of the polyphased composition might be controlled, or achieved, for example, by adjusting the volume fraction, stiffness and shape factor of the micro inclusions of the thermoplastic material.

In the case of the rubber composition containing the inclusion of dispersed thermoplastic particles, the thermoplastic particles may be considered as being the micro phase.

A tailoring, or adjusting, of the macroscopic properties of the tire chafer rubber composition is considered herein to be possible by controlling the local internal stresses developed in each constituent, namely the micro inclusion of the particulate thermoplastic polymer constituent in the macro phase of the rubber matrix constituent, of the tire chafer rubber composition. A degree of control of the local internal stresses, or local stresses developed in the micro inclusions and the matrix, can be accomplished, for example, by varying the volume fraction of micro inclusions, the stiffness ratio of the matrix to micro inclusions as well as the shape of the thermoplastic particles themselves.

The aforesaid local internal stresses might be estimated, for example, by using specific self-consistent theories well known to those having skill in such field. An example of such theory can be found in the following literature reference: **Thermomechanical Behavior of Metal Matrix Composites, General Theory and Self-Consistent Approach,** F. Corvasce, P. Lipinski and M. Berveiller, pages 431-514, JNC6 11-13 October 1996, Paris, 6th National Congress on the composites.

Therefore, for the chafer composition of this invention, a polyphased rubber composition, composed of the rubber matrix phase and the thermoplastic polymer micro inclusion phase, having both a relatively high stiffness property and a relatively low stiffness variation, or softening, property is provided. By the term "polyphased" it is simply meant that "a material is composed of at least two distinct physical phases", for example, the aforesaid rubber matrix phase and the dispersed, particulate micro inclusion phase. It is believed this terminology is acceptable to those having skill in such rubber composition art.

This aspect is particularly desirable for the tire chafer in order to promote a substantial maintenance of its mechanical properties over a major portion of the useful life of the tire such as, for example, complex modulus, loss modulus, tangent delta (Tan. delta), abrasion resistance and permanent set, all terms well known to those skilled in such art.

Accordingly, for the tire chafer of this invention, it is desired that the chafer has a low stiffness variation as measured by sheer complex modulus G* at 60°C of not more than 15, preferably not more than 10, percent over a reasonable, normal, useful life of the tire.

Thus, in accordance with this invention, it is considered advantageous to provide a tire which uses a rubber composition for the chafer which contains a dispersion of micro inclusions of the dispersed ultra high molecular weight thermoplastic particles.

In the practice of this invention, the aforesaid particulate thermoplastic polymer for the micro inclusion into the chafer elastomer composition can be of various compositions such as, for example, ultra high molecular weight polyethylene and/or polypropylene. The molecular weights of the thermoplastic, yet somewhat crystalline, polymers are at least one million and can be as high, for example, as seven million (weight average molecular weight). Thus, a molecular weight in a range of one to seven, alternatively three to five, million is contemplated for the practice of this invention.

In particular, it is considered herein that such polymers are thermoplastic although they may contain some degree of crystallinity in a form, for example, of crystallites within the thermoplastic polymer itself.

In the further practice of this invention such particulate thermoplastic polymer(s) desirably have a particle size in a range of 10 to 150 microns.

Further, the low specific gravity of crystalline polyolefin thermoplastics such as the ultra high molecular weight polyethylene within a range of 0.9 to 1.0 g/cm³ allows a consideration of such polymer for development of relatively light rubber compositions. Low specific gravity rubber compositions contemplated for one aspect of the practice of this invention may be, for example, in a range of 0.95 to 1.1 g/cm³ as compared to a typical carbon black reinforced rubber composition having a specific gravity in a range of 1.1 to 1.2 g/cm³.

Accordingly, in one aspect of this invention, a process and resulting product is provided such as, for example, a method of preparing a tire, of reducing the specific gravity of a rubber composition having a specific gravity greater than 1.0 and comprised of at least one diene-based elastomer together with conventional compounding ingredients such as a chafer rubber composition, which comprises dispersing within said rubber composition 10 to 70 phr of independent particles as a micro inclusion in said elastomer(s) of at least one particulate, ultra high molecular weight, thermoplastic polymer having a molecular weight in a range of one to seven million, alternatively two to five million, a softening point in a range of 110°C to 180°C and a specific gravity in a range of 0.9 to 0.98.

It is desired, for the chafer composition of this invention, to provide a relatively high stiffness rubber composition with relatively low stiffness breakdown using the concept of hard, thermoplastic, inclusions dispersed within a soft rubber composition, the rubber matrix must have a relatively low stiffness breakdown as compared to various strain histories.

By the term "strain histories", as hereinbefore referenced, it is meant "the various maximum strain amplitudes" which are terms believed to be well known by those skilled in such art.

The dynamic and static compound properties such as, for example, complex modulus, loss modulus and tangent delta properties, can be determined before and after various cyclic strains. The change in dynamic properties before and after cycling are demonstrative of the compound property stabilities and, thus, the relatively low stiffness variation, or softness, over time.

By controlling the amount of particulate thermoplastic polymer inclusion in the rubber composition versus the stiffness ratio of the thermoplastic polymer inclusion versus the matrix of the rubber composition, the local strain amplitude in each phase (rubber composition matrix phase and thermoplastic particle dispersed inclusion phase) can be controlled, or modified. The soft rubber matrix is considered herein to contribute to large strain values, or strains of large amplitudes, and the micro inclusions of the aforesaid ultra high molecular weight thermoplastic polymer(s) are considered herein to provide reinforcement for the chafer rubber composition.

This phenomenon provides an opportunity to utilize specific tuning, or adjustment, of the chafer rubber matrix composition's non-linear properties such as, for example, stress-strain properties such as tensile and loss modulus properties of the rubber composition vulcanizates, as well as a reduction of stiffness softening and permanent set of the polyphased rubber composition as compared to various strain histories as well as ozone degradation resistance, resistance to crack propagation and resistance of the chafer to abrasion.

In practice, the chafer rubber portion may be composed of various diene-based elastomers such as, for example, homopolymers of conjugated dienes such as, for example, 1,3-butadiene or isoprene or copolymers of 1,3-butadiene and isoprene or of 1,3-butadiene and/or isoprene and an aromatic vinyl compound such as styrene or alpha-methylstyrene.

Representative examples of such diene-based elastomers are homopolymers and copolymers of conjugated dienes such as, for example, isoprene and 1,3-butadiene, and copolymers of conjugated dienes and a vinyl aromatic compound such as, for example, styrene and alpha-methylstyrene. Representative of such elastomers are, for example, natural or synthetic cis 1,4-polyisoprene, cis 1,4-polybutadiene as a polymer or 1,3-butadiene monomer, isoprene/butadiene copolymers, styrene/butadiene copolymers, styrene/isoprene copolymers, styrene/isoprene/butadiene terpolymers, medium vinyl polybutadiene polymers having a vinyl content in a range of 30 to 50, high vinyl polybutadiene polymers having a vinyl content in a range of 50 to 90 percent.

The chafer rubber portion of the tire construction, might be composed of elastomers typically selected from one or more of cis 1,4-polybutadiene rubber, blends of the polybutadiene rubber with styrene/butadiene copolymer rubber, natural rubber or mixture of various diene-based elastomers as hereinbefore described. Preferably, a major portion of the chafer elastomers is cis 1,4-polybutadiene rubber.

In practice, the tire chafer construction may be created, for example, through a single die at a temperature in a range, for example, of 100°C to 125°C, typically 110°C and, thus, is considered as being a relatively hot extrusion process, although such actual extrusion temperatures themselves are considered normal for a rubber extrusion process. The extruded chafer is then built onto a rubber tire carcass to create an assembly thereof. The assembly is then vulcanized, or cured, at an elevated temperature. Such overall process is well known to those skilled in such art. In this manner then, by the aforesaid extrusion process and the co-vulcanization of the chafer and bead portions, the chafer is an integral, cooperative, unit of the tire.

It is readily understood by those having skill in the art that the rubber composition of the chafer rubber would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, and plasticizers, fillers, pigments, fatty acid, zinc oxide, waxes, antioxidants and antiozonants, peptizing agents and reinforcing materials such as, for example, silica and carbon black. As known to those skilled in the art, depending on the intended use of the sulfur vulcanizable and sulfur vulcanized material (rubbers), the additives mentioned above are selected and commonly used in conventional amounts.

Reinforcing fillers for the elastomer compositions may be, for example, carbon black, typically of, for example, the N-110, N-220, and low to high surface and structure classifications generally, and also sometimes silica, typically precipitated silica, or a combination of carbon black and silica. An exemplary reinforcing filler content for the elastomer compositions is a range of 35 to 100 phr and the amount and choice of reinforcing filler used will be up to the practitioner, depending somewhat upon the degree and extent of reinforcement desired. Often, a silica coupler is used for the silica reinforcement in order to enhance its reinforcement of the elastomer(s). Such use of silica couplers is well known to those skilled in such art.

Typical amounts of tackifier resins, if used, comprise 0.5 to 10 phr, usually 1 to 5 phr. Typical amounts of processing aids comprise 1 to 20 phr. Such processing aids can include, for example, aromatic, naphthenic, and/or paraffinic processing oils. Typical amounts of antioxidants comprise 1 to 5 phr. Representative antioxidants may be, for example, diphenyl-p-phenylenediamine and others such as, for example, those disclosed in **The Vanderbilt Rubber Handbook (1978)**, pages 344-346. Typical amounts of antiozonants comprise 1 to 5 phr. Typical amounts of fatty acids, if used, which can include stearic acid comprise 0.5 to 4 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, dibenzamidodiphenyl disulfide.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 6 phr, with a range of from one to 2.5, being preferred.

Accelerators are used to control the time and/or temperature required for vulcanization and to improve the properties of the vulcanizate. Retarders are also used to control the vulcanization rate.

In one embodiment, a single accelerator system may be used, i.e., primary accelerator. Conventionally and preferably, a primary accelerator(s) is used in total amounts ranging from 0.5 to 4, preferably 0.8 to 2.5, phr. In another embodiment, combinations of a primary and a secondary accelerator might be used, with the secondary accelerator being used in amounts of 0.05 to 3 phr, for example, in order to activate and to improve the properties of the vulcanizate. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound. The presence and relative amounts of sulfur vulcanizing agent and accelerator(s) are not considered to be an aspect of this invention which is more primarily directed to the use of silica as a reinforcing filler in combination with a coupling agent in a prescribed rubber blend.

The presence and relative amounts of the above additives are not considered to be an aspect, except as may hereinbefore be set forth, of the present invention which is more primarily directed to the tire chafer in which the chafer contains a micro inclusion of a dispersion of one or more ultra high molecular weight particulate thermoplastic polymers.

The tire can be built, shaped, molded and cured by various methods which will be readily apparent to those having skill in such art.

The invention may be better understood by reference to the following examples in which the parts and percentages are by weight unless otherwise indicated.

### EXAMPLE I

Rubber compositions composed of natural cis 1,4-polyisoprene rubber and cis 1,4-polybutadiene rubber were prepared containing micro inclusions of ultra high molecular weight polyethylene particles compositions and referred to herein as Sample B.

A control rubber composition was also prepared of the natural rubber and cis 1,4-polybutadiene rubber, but without the aforesaid micro inclusions and referred to herein as Control Sample A.

The rubber compositions were prepared by mixing the ingredients in two sequential non-productive mixing stages (without the curatives) for about two minutes to a temperature of about 165°C followed by a final productive mixing stage (basically for addition of the curatives) for about two minutes to a temperature of about 110°C.

The resulting compositions were cured under conditions of elevated temperature and pressure, namely, for about 18 minutes at about 150°C.

The ultra high molecular weight polyethylene particles, having a softening point of about 132°C, and the rubber composition were mixed in the initial two internal mixers to a temperature of about 165°C. Accordingly, it is concluded herein that the particles of the ultra high molecular weight polyethylene softened somewhat during the rubber mixing process and were homogeneously dispersed within the rubber matrix as micro inclusions. Thereby, a polyphased rubber composition was created which was composed of the rubber matrix phase as the major phase and the thermoplastic, particulate, micro inclusion minor phase dispersed within the rubber matrix phase.

Due to the high molecular weight of the thermoplastic polymer and its apparently associated very high viscosity upon melting, its particles substantially retain their individual identity and perhaps even much of their overall size and shape even during the elastomer mixing at temperatures above the softening point temperature of the thermoplastic polymer.

It is to be appreciated that the ultra high molecular weight polyethylene micro inclusion phase remains as unvulcanized particles within the rubber matrix during the sulfur vulcanization, or curing, of the sulfur vulcanizable, natural rubber phase.

The rubber compositions were comprised of the ingredients illustrated in Table 1. The values, for the most part, are simply rounded to the nearest whole number.

**TABLE I**

| **Sample #** | **Control A** | **Exp. B** |
|---|---|---|
| **Non-Productive Mix Stages** | | |
| Natural rubber¹ | 25 | 25 |
| Cis 1,4-polybutadiene² | 75 | 75 |
| Thermoplastic polymer³ | 0 | 20 |
| Carbon Black⁴ | 90 | 65 |
| Processing oil, aromatic | 2 | 2 |
| Fatty Acid | 1 | 1 |

| **Productive Mix Stage** | | |
|---|---|---|
| Zinc Oxide | 5 | 5 |
| Antioxidants⁵ | 4 | 4 |
| Sulfur | 4 | 4 |
| Sulfenamide Type Accelerators | 1.7 | 1.7 |

| | | |
|---|---|---|
| ¹ Cis 1,4-polyisoprene natural rubber. | | |
| ² Cis 1,4-polybutadiene rubber obtained as BUDENE® 1207 from The Goodyear Tire & Rubber Company. | | |
| ³ A particulate thermoplastic polymer obtained as GUR 4120 from the Hoechst company. The thermoplastic polymer was, reportedly, an ultra high molecular weight polyethylene having a softening point according to ISO Test No. 306 of about 132°C, an average particle size of about 60 microns and a molecular weight (weight average) of about three to about five million; | | |
| ⁴ N-234 carbon black; | | |
| ⁵ Of the diarylparaphenylene diamine type. | | |

### EXAMPLE II

The cured rubber compositions from Example I were then tested to obtain physical properties of the rubber compositions and reported in the following Table 2 which were then used to predict properties of a tire chafer composition.

**TABLE II**

| **Sample #** | **Control A** | **Exp. B** |
|---|---|---|
| 200% Modulus (MPa) | 8.2 | 8.9 |
| Tensile Strength (MPa) | 14.9 | 15.5 |
| Elongation (%) | 330 | 352 |
| Hardness, Shore A | 73 | 75 |
| Rebound (100°C) | 56 | 66 |
| G' (A) @ 60°C (MPa) | 5.1 | 3.9 |
| G' (B) @ 60°C (MPA) | 4.1 | 3.6 |
| DIN Abrasion (gms) | 0.18 | 0.15 |
| Tan. Delta (A) @ 60°C | 0.22 | 0.15 |
| Tan. Delta (B) @ 60°C | 0.145 | 0.135 |
| Ozone Resistance | cracks | no cracks |
| Green 20% Modulus (MPA)³ | 0.22 | 1.27 |

| | | |
|---|---|---|
| Notes: 1) The reduced DIN abrasion for Exp B indicates a greater resistance to abrasion for the rubber composition which is considered herein to be a beneficial property for a chafer component of a tire. 2) The ozone resistance is determined by exposing the samples to ozone in a chamber. The cracking, or lack of cracking, appearing in the sample is a visual observation. Lack of cracking, as evidenced by Exp B sample, is considered herein to be a beneficial property upon exposure to ozone is a beneficial property for a tire chafer component. 3) Clearly, the green strength of Exp A is greatly improved as compared to Control B sample which, as hereinbefore, is a beneficial property for the unvulcanized rubber composition for a tire chafer component. 4) Both the Tan. delta (A) and G' (A) were initial tests taken at one percent shear strain (stress in terms of MPA at two percent elongation). 5) Both the Tan. delta (B) and the E' (B) were taken after pre-cycling the rubber compositions at a 10 percent shear-strain for about 10 minutes at about 10 Hz. | | |

The storage modulus of the rubber composition is referred to in Table 2 as G'. The storage modulus reported in Table 2 for Control Sample A compared to Experimental Sample B shows that the stiffness of the rubber compositions are initially similar but remain more stable with Sample B after a pre-cycle strain as evidenced by storage modulus G' (A) and storage modulus G' (B). This is considered herein to be significant because this is considered herein to lead to low rubber composition stiffness variation as a tire tread base rubber composition with tire solicitation history.

The tangent delta (Tan. delta) properties reported in Table 2 for Control Sample A as compared to Experimental Sample B shows that the hysteresis is more stable for Sample B as evidenced by increase in Tan. delta from Sample B to Control Sample A. This is considered herein as being significant because the rubber composition's hysteresis is varying, thus, leading to possible tire rolling resistance variations and local increased heat build-up.

The Tan. delta is considered as being predictive of hysteresis of a rubber compound. A higher Tan. delta value is predictive of a higher hysteresis.

The storage modulus property is reported in Table 2 as G'. The storage modulus is indicative of the compound stiffness. The storage modulus for Sample B as compared to Sample A shows that the stiffness of softening of the rubber composition can be reduced by using the very high molecular weight polyethylene particles as a partial carbon black replacement while maintaining a similar Shore A hardness

Therefore, it can be concluded that the use of the inclusion of the particulate polymer into the rubber composition matrix can be used to form a relatively stiff, low hysteresis, rubber composition which also has a relatively low stiffness-softening property. This is considered to be a significant and important aspect of the invention because a tire chafer component is submitted to various strain or stress solicitations during the tire life.

For the tensile elongation and 200% modulus values tests, reference may be made to ASTM Test D412-92, method B.

For the rebound tests, reference may be made to DIN 53512.

For the hardness, Shore A test, reference may be made to ASTM 2240-91 and may be determined at room temperature, or about 23°C.

For the G' values, which are sometimes referred to as "the shear storage modulus", reference may be made to **Science and Technology of Rubber**, second edition, 1994, Academic Press, San Diego, CA, edited by James E. Mark et al, pages 249-254. The use of the storage modulus (E') to characterize rubber compositions is well known to those having skill in such art.

These properties, namely the G', G" and Tan. delta, characterize the viscoelastic response of a rubber test sample to a shear strain at a fixed frequency and temperature, most often measured at 0°C and 60°C.

The Tan. delta and shear storage modulus (G') are well known to those skilled in the rubber composition characterization art. The shear storage modulus (G') values were determined before and after (the G' (A) and the G' (B) values) pre-cycling at 10 percent sheer strain. The G' values are indicative of rubber composition stiffness stability. The Tan. delta value at 60°C before and after pre-cycling at 10 percent shear is indicative of a hysteresis change with strain history.

Therefore, the benefit of having the micro inclusion of the dispersion of the thermoplastic particles in the elastomer matrix of the tire's chafer component can be expressed as a way to achieve a stiff rubber composition with stable dynamic properties and low permanent set properties such as, for example, storage modulus, and reduced loss modulus and tangent delta. This is considered herein as being a particular benefit because they indicate a lower heat build-up for the chafer rubber composition in the bead portion of the tire.

Accordingly, it is considered herein that rubber composition properties of the tire chafer matrix composition when compared with comparative control composition A, are predictive that a tire chafer, utilizing the chafer composition of this invention, will provide a tire with relatively enhanced (i) rim chafing resistance, relatively low flat spotting and relatively lower heat build-up, and (ii) improved resistance to ozone degradation, reduced weight of the overall chafer rubber composition and reduced rolling resistance for the tire.

Therefore, it is concluded that the polyphased composition of this invention with the micro inclusion of the particulate ultra high molecular weight polyethylene within the rubber matrix provided the following benefit, insofar as the rubber composition properties are concerned: low permanent set hysteresis, stable rubber composition stiffness and hysteresis versus various strain histories.

## Claims

1. A pneumatic tire having a pair of spaced apart, relatively inextensible bead components, and a connecting carcass between said bead components, a circumferential tread designed to be ground-contacting and where a rubber chafer component is positioned around at least a portion of each of said bead components and designed for contacting a rigid rim of a wheel and thereby interface between said tire bead component and said rim, **characterized in that** said chafer is composed of a polyphased composition comprised of (i) 100 parts by weight of at least one diene-based elastomer and (ii) 5 to 80 phr of a micro inclusion therein as a dispersion of particles within one or more of said elastomer(s) of at least one particulate, ultra high molecular weight, thermoplastic polyethylene polymer having a molecular weight in a range of 3 to 5 million and a softening point in a range of 110°C to 180°C and (iii) 20 to 100 phr of reinforcing fillers selected from carbon black, silica and carbon black and silica.

2. The tire of claims 1 wherein said diene-based elastomers are selected from homopolymers and copolymers of conjugated dienes and copolymers of conjugated diene(s) and a vinyl aromatic compound.

3. The tire of any of the preceding claims wherein said diene-based elastomers are selected from at least one of natural or synthetic cis 1,4-polyisoprene, cis 1,4-polybutadiene as a polymer of 1,3-butadiene monomer, isoprene/butadiene copolymers, styrene/butadiene copolymers, styrene/isoprene copolymers, styrene/isoprene/butadiene terpolymers, medium vinyl polybutadiene polymers having a vinyl content in a range of 30 to 50, high vinyl polybutadiene polymers having a vinyl content in a range of 50 to 90 percent.

4. The tire of claims 1 wherein said chafer is composed of elastomer(s) selected from one or more of cis 1,4-polybutadiene rubber, blends of such polybutadiene rubber with styrene/butadiene copolymer rubber provided, however, that a major portion of the chafer elastomers is cis 1,4-polybutadiene.

5. The tire of any of the preceding claims wherein said polyphased composition for said chafer is prepared by mixing said thermoplastic polyethylene polymer with said elastomer(s) to a temperature in a range of 120°C to 190°C and at least 10°C above the softening point of said thermoplastic polymer.

## Patentansprüche

1. Luftreifen mit einem Paar von beabstandeten, relativ undehnbaren Wulstkomponenten und einer verbindenden Karkasse zwischen den Wulstkomponenten und einer für den Bodenkontakt ausgelegten Umfangslauffläche, wobei eine Gummiwulstband-Komponente um mindestens einen Teil von jeder Wulstkomponente positioniert ist und für den Kontakt mit einer starren Felge von einem Rad und dadurch als Schnittstelle zwischen der Reifenwulstkomponente und der Felge ausgelegt ist, **dadurch gekennzeichnet, dass** das Wulstband aus einer mehrphasigen Zusammensetzung zusammengesetzt ist, die umfasst (i) 100 Gew.-Teile mindestens eines Elastomers auf Dienbasis und (ii) 5 bis 80 ThK eines Mikroeinschlusses darin als Dispersion von Teilchen in einem oder mehreren der Elastomere von mindestens einem teilchenförmigen, ultrahochmolekularen, thermoplastischen Polyethylen-Polymer mit einem Molekulargewicht im Bereich von 3 bis 5 Millionen und einem Erweichungspunkt im Bereich von 110 bis 180°C und (iii) 20 bis 100 ThK von Verstärkungsfüllstoffen ausgewählt aus Ruß, Kieselsäure und Ruß und Kieselsäure.

2. Reifen nach Anspruch 1, worin die Elastomere auf Dienbasis aus Homopolymeren und Copolymeren von konjugierten Dienen und Copolymeren von einem oder mehreren konjugierten Dienen und einer aromatischen Vinylverbindung ausgewählt sind.

3. Reifen nach irgendeinem der vorhergehenden Ansprüche, worin die Elastomere auf Dienbasis ausgewählt sind aus mindestens einem von natürlichem oder synthetischem cis-1,4-Polyisopren, cis-1,4-Polybutadien als ein Polymer von 1,3-Butadienmonomer, lsopren/Butadien-Copolymeren, Styrol/Butadien-Copolymeren, Styrol/Isopren-Copolymeren, Styrol/Isopren/Butadien-Terpolymeren, Vinylbutadien-Polymeren mit einem mittleren Vinylgehalt mit einem Vinylgehalt in einem Bereich von 30 bis 50 und Polybutadien-Polymeren mit einem hohen Vinylgehalt mit einem Vinylgehalt in einem Bereich von 50 bis 90%.

4. Reifen nach Anspruch 1, worin das Wulstband aus einem oder mehreren Elastomeren ausgewählt aus einem oder mehreren aus cis-1,4-Polybutadien-Kautschuk und Mischungen von einem derartigen Polybutadien-Kautschuk mit Styrol/Butadien-Copolymerkautschuk zusammengesetzt ist, mit der Maßgabe, dass jedoch ein Hauptteil der Wulstband-Elastomere cis-1,4-Polybutadien ist.

5. Reifen nach irgendeinem der vorhergehenden Ansprüche, worin die mehrphasige Zusammensetzung für das Wulstband durch Mischen des thermoplastischen Polyethylen-Polymers mit dem oder den Elastomeren auf eine Temperatur im Bereich von 120 bis 190°C und mindestens 10°C über dem Erweichungspunkt des thermoplastischen Polymers hergestellt wird.

## Revendications

1. Bandage pneumatique possédant une paire de composants de talons relativement inextensibles, espacés l'un de l'autre, et une carcasse de connexion entre lesdits composants de talons, une bande de roulement circonférentielle conçue pour entrer en contact avec le sol, et dans lequel un composant de bandelette talon en caoutchouc est disposé autour d'au moins une portion de chacun desdits composants de talons et est conçu pour entrer en contact avec la jante rigide d'une roue pour ainsi procurer une interface entre ledit composant de talon de bandage pneumatique et ladite jante, **caractérisé en ce que** ladite bandelette talon comprend une composition polyphasique comprenant (i) au moins un élastomère à base diénique à concurrence de 100 parties en poids et (ii) une micro inclusion dans ladite composition, à concurrence de 5 à 80 phr, sous la forme d'une dispersion de particules à l'intérieur d'un ou de plusieurs desdits élastomères d'au moins un polymère de polyéthylène thermoplastique particulaire possédant un poids moléculaire ultra élevé dans la plage de 3 à 5 millions et un point de ramollissement dans la plage de 110 °C à 180 °C, et (iii) des matières de charge de renforcement choisies parmi le groupe comprenant du noir de carbone, de la silice, et du noir de carbone et de la silice, à concurrence de 20 à 100 phr.

2. Bandage pneumatique selon la revendication 1, dans lequel lesdits élastomères à base diénique sont choisis parmi le groupe comprenant des homopolymères et des copolymères de diènes conjugués et des copolymères d'un ou de plusieurs diènes conjugués et d'un composé vinylaromatique.

3. Bandage pneumatique selon l'une quelconque des revendications précédentes, dans lequel lesdits élastomères à base diénique représentent au moins un des membres choisis parmi le groupe comprenant le cis-1,4-polyisoprène naturel ou synthétique, le cis-1,4-polybutadiène sous la forme d'un polymère du monomère de 1,3-butadiène, des copolymères d'isoprène/butadiène, des copolymères de styrène/butadiène, des copolymères de styrène/isoprène, des terpolymères de styrène/isoprène/butadiène, des polymères de butadiène possédant une teneur vinylique moyenne, la teneur en groupes vinyle se situant dans la plage de 30 à 50 %, des polymères de polybutadiène possédant une teneur vinylique élevée, la teneur en groupes vinyle se situant dans la plage de 50 à 90 %.

4. Bandage pneumatique selon la revendication 1, dans lequel ladite bandelette talon est composée d'un ou de plusieurs élastomères représentant un ou plusieurs membres choisis parmi le groupe comprenant le caoutchouc de cis-1,4-polybutadiène, des mélanges homogènes d'un caoutchouc de polybutadiène de ce type avec du caoutchouc de copolymère de styrène/butadiène, avec cette réserve néanmoins qu'une portion majeure des élastomères composant la bandelette talon représente le cis-1,4-polybutadiène.

5. Bandage pneumatique selon l'une quelconque des revendications précédentes, dans lequel on prépare ladite composition polyphasique pour ladite bandelette talon en mélangeant ledit polymère de polyéthylène thermoplastique avec ledit ou lesdits élastomères à une température qui se situe dans la plage de 120 °C à 190 °C et à une température au moins à 10 °C au-dessus du point de ramollissement dudit polymère thermoplastique.
